# EUROPÄISCHE PATENTSCHRIFT

(11) **EP 2 126 925 B1**
(45) Veröffentlichungstag und Bekanntmachung des Hinweises auf die Patenterteilung: **16.04.2014**
(21) Anmeldenummer: 08716743.3
(22) Anmeldetag: 28.01.2008
(51) Int. Cl.: G12B 5/00, H02N 2/00

(54) **VORRICHTUNG UND VERFAHREN ZUM MIKROMECHANISCHEN POSITIONIEREN UND MANIPULIEREN EINES OBJEKTES**
DEVICE AND METHOD FOR THE MICROMECHANICAL POSITIONING AND HANDLING OF AN OBJECT
DISPOSITIF ET PROCÉDÉ DE POSITIONNEMENT ET DE MANIPULATION MICRO-MÉCANIQUE D'UN OBJET

(30) Priorität: 29.01.2007 DE 102007005293
(43) Veröffentlichungstag der Anmeldung: 02.12.2009
(73) Patentinhaber: Technische Universität Ilmenau, 98693 Ilmenau (DE)
(72) Erfinder: RANGELOW, Ivo W., 34225 Baunatal (DE); KLETT, Stefan, 99880 Waltershausen (DE); GULIYEV, Eishad, 98693 Ilmenau (DE); IVANOV, Tzvetan, 98693 Ilmenau (DE); VOLLAND, Burkhard, 99085 Erfurt (DE)
(74) Vertreter: Engel, Christoph Klaus
(86) Internationale Anmeldenummer: PCT/EP2008/050963
(87) Internationale Veröffentlichungsnummer: WO 2008/092824

(56) Entgegenhaltungen:
- EP-B- 0 838 302
- WO-A-97/21977
- DE-A1- 4 214 220
- DE-A1-102004 063 296
- DE-A1-102005 051 581
- US-A1- 2005 198 844

## Beschreibung

Die vorliegende Erfindung betrifft eine Vorrichtung und ein Verfahren zum mikromechanischen Positionieren und Manipulieren eines Objektes mit vorzugsweise piezoelektrischen Aktoren.

Mikromechanische Positioniervorrichtungen werden in verschiedenen Bereichen eingesetzt. Wichtigstes Einsatzgebiet ist die Rastersondenmikroskopie sowie die Nanopositionierung und Nanomanipulation. Rastersondenmikroskope sind leistungsstarke Werkzeuge z.B. für die Untersuchung von Oberflächeneigenschaften verschiedenartiger Materialien, die Bestimmung von molekularen und atomaren Wechselwirkungen auf Oberflächen, die Abbildung individueller biologischer Moleküle. Jedoch haben kommerzielle Rastersondenmikroskope aufgrund ihrer Positionierungs- und Positionskontrollmechanismen große Abmessungen, die wiederum die Scangeschwindigkeit und den Scanbereich sowie den Einsatzbereich derartiger Mikroskope beschränken. Außerdem lassen die in diesen Mikroskopen verwendeten Antriebsmechanismen keine höhere Dynamik zu.

Aus der US 2006/0112760 ist eine neue Positioniervorrichtung bekannt, die über eine höhere Scangeschwindigkeit verfügt, jedoch aufgrund ihrer geometrischen Abmessungen und metallischen Ausführung für Echtzeitabbildungen (Videoratenabbildungen (ca. 25 Bilder/s) mit lateralen und vertikalen Auflösungen im Nanometerbereich) nur eingeschränkt anwendbar ist.

Weiterhin sind aus der US 6,806,991 B1 elektrostatisch oder thermisch angetriebene mikromechanische Positioniersysteme bekannt, mit denen trotz deutlich geringerer Abmaße und Massen keine höhere Scangeschwindigkeit realisierbar ist.

Bei der Rastersondenmikroskopie wird die Positionskontrolle häufig mit optischen Methoden (z.B. interferometrisch) realisiert.

Aus der DE 42 14 220 A1 ist eine Anordnung zur piezoelektrischen Betätigung eines x-y-Positioniertisches bekannt, welche über Federgelenkvierecke verfügt, deren Bewegung durch Wegaufnehmer erfasst wird.

Die WO 97/21977 A1 zeigt einen Tisch eines Rasterkraftmikroskopes, dessen Bewegung mit Belastungssensoren gemessen wird.

Die US 2005/0198844 A1 zeigt eine Vorrichtung mit einem beweglichen Objektträger, welcher durch piezoelektrische Antriebe angetrieben wird.

Aus der DE 10 2005 051 581 A1 ist ein Abtastmechanismus für ein Rastersondenmikroskop bekannt, welcher ein Bewegungsstellglied mit einem piezoelektrischen Element aufweist.

Die DE 10 2004 063 296 A1 zeigt eine Trägerplatte mit Rückkopplungskontrolle zur feinen Einstellung der Positionierung. Die Trägerplatte ist durch doppel-L-förmige Plattenfedern mit einem Sockel verbunden. Die Plattenfedern sind als Flexionsscharnier gestaltet. Auf einer Seite der Plattenfedern ist jeweils ein von der Dehnung abhängiger Widerstand angeordnet, um die Größe der Verformung der Plattenfeder zu erfassen.

Die EP 0 838 302 B1 zeigt einen Positionierungsmechanismus mit zwei Baugliedern und einem länglichen Biegeelement, welches zwischen den beiden Baugliedern angebracht ist. Die beiden Bauglieder sind über Tragfedern miteinander gekoppelt. Der Positionierungsmechanismus umfasst einen Positionssensor, welcher durch eine Elektrode auf dem Substrat und durch eine weitere Elektrode gebildet ist.

Aufgabe der vorliegenden Erfindung ist es deshalb, die aus dem Stand der Technik bekannten Nachteile zu überwinden und eine Vorrichtung und ein dazugehöriges Verfahren zum mikromechanischen Positionieren und Manipulieren von Objekten bereitzustellen, mit denen die Scangeschwindigkeit erhöht und die Positioniergenauigkeit verbessert werden kann, so dass Echtzeitabbildungen bzw. Videoratenabbildungen (ca. 25 Bilder/s) mit einer lateralen und vertikalen Auflösung im Nanometerbereich realisiert werden können.

Erfindungsgemäß wird diese Aufgabe vorrichtungsseitig durch die Merkmale des ersten Patentanspruches und verfahrensseitig durch die Merkmale des dreizehnten Patentanspruches gelöst.

Bevorzugte weitere Ausgestaltungen der Erfindung sind in den Unteransprüchen angegeben.

Weitere Einzelheiten und Vorteile der Erfindung sind dem nachfolgenden Beschreibungsteil zu entnehmen, in dem die Erfindung unter Bezugnahme auf die beigefügten Zeichnungen, in denen dieselben Bezugszeichen gleiche oder ähnliche Teile in den gesamten Figuren bezeichnen, näher erläutert wird. Es zeigt:
- Fig. 1:: ein erstes Ausführungsbeispiel einer erfindungsgemäßen Vorrichtung zum mikromechanischen Positionieren und Manipulieren eines Objektes;
- Fig. 1a:: eine vergrößerte Darstellung von Führungselementen der in Fig. 1 dargestellten Vorrichtung mit integrierten Positionsdetektoren;
- Fig. 2:: eine vergrößerte Darstellung des Ausführungsbeispiels nach Fig. 1;
- Fig. 3:: eine Veranschaulichung einer Verschiebung des Objektträgers in x-Richtung im Gegentaktprinzip;
- Fig. 4:: ein zweites Ausführungsbeispiel der erfindungsgemäßen Vorrichtung;
- Fig. 5:: ein drittes Ausführungsbeispiel der erfindungsgemäßen Vorrichtung;
- Fig. 6:: ein viertes Ausführungsbeispiel der erfindungsgemäßen Vorrichtung;
- Fig. 7:: ein fünftes Ausführungsbeispiel der erfindungsgemäßen Vorrichtung;
- Fig. 8:: ein sechstes Ausführungsbeispiel der erfindungsgemäßen Vorrichtung;
- Fig. 9:: ein siebentes Ausführungsbeispiel der erfindungsgemäßen Vorrichtung;
- Fig. 10:: ein achtes Ausführungsbeispiel der erfindungsgemäßen Vorrichtung;
- Fig. 11:: ein neuntes Ausführungsbeispiel der erfindungsgemäßen Vorrichtung; und
- Fig. 12:: ein zehntes Ausführungsbeispiel der erfindungsgemäßen Vorrichtung;
- Fig. 13:: ein elftes Ausführungsbeispiel der erfindungsgemäßen Vorrichtung.

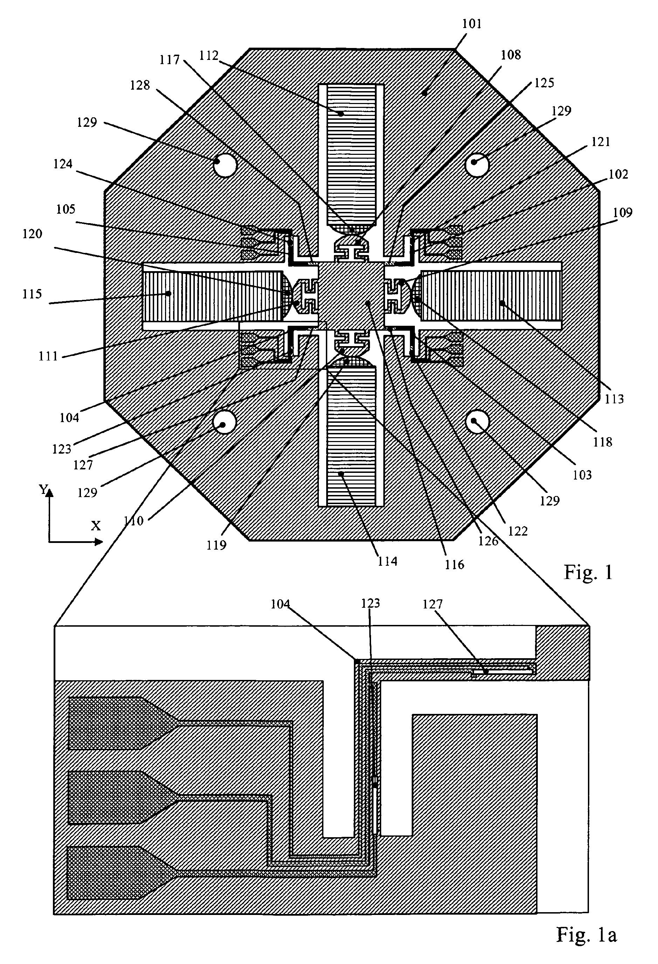

In Fig. 1 und 1a ist ein Ausführungsbeispiel der erfindungsgemäßen Vorrichtung bzw. ein vergrößerter Ausschnitt daraus dargestellt. Erfindungsgemäß stellen das Stützelement 101, der Objektträger 116, die Führungselemente 102 - 105 und die Elemente zur Übertragung der Bewegung von den Antriebselementen auf den Objektträger 108 - 111 ein monolithisches Bauteil aus Silizium, vorzugsweise der Kristallorientierung <111> oder <100>, dar. Aufgrund der im Stand der Technik hinlänglich bekannten Halbleitertechnologien kann somit eine Miniaturisierung und eine gleichzeitige Reduzierung der Masse der erfindungsgemäßen Vorrichtung realisiert werden. Außerdem verfügt einkristallines Silizium, welches durch eine hohe Steifigkeit bei geringer Massendichte charakterisiert ist, über eine große Resonanzfrequenz, wodurch im Scan- oder Positionierprozess eine große Grenzfrequenz mit der erfindungsgemäßen Positioniervorrichtung erreicht werden kann.

Der Objektträger 116 ist über Führungselemente 102 - 105 mit einem einteiligen Stützelement 101 gekoppelt, wobei die Führungselemente verschiedenste Formen (z.B. L-förmig) aufweisen können.

Der bzw. die Positionsdetektoren 121 - 128, die piezoresistive Positionssensoren sind, ist/sind in mindestens einem Führungselement 102 - 105 integriert. Sie dienen als Auslenkungssensoren für die entsprechenden Bewegungsrichtungen. Als Positionsdetektor kann ebenfalls auch ein FeldeffektTransistor eingesetzt werden. Hierbei dient der Kanal als piezoresistives Detektionselement. Die notwendige Steuerelektronik kann bei Verwendung von Silizium als Konstruktionsmaterial für die erfindungsgemäße Vorrichtung z.B. auf dem Stützelement integriert werden.

In einer vorteilhaften Ausführungsform der erfindungsgemäßen Vorrichtung sind an allen Führungselementen Positionsdetektoren angeordnet. Damit ist eine gleichzeitige, mehrfache Auswertung der Position des Objektträgers möglich.

Zur Kompensation von Umgebungseinflüssen, wie z.B. Temperaturschwankungen, werden die Positionsdetektoren (piezoresistive Positionssensoren) in einer weiteren bevorzugten Ausführungsform in einer Brückenschaltung verschaltet, wobei weitere notwendige Elemente dieser Brücke auf den nichtbeweglichen Teilen der erfindungsgemäßen Vorrichtung (z.B. auf dem Stützelement) integriert werden können.

Die Antriebselemente 112 - 115 sind in das Stützelement 101 integriert. Über jeweils einen Punktkontakt bzw. über kugelförmig ausgebildete Kontaktstellen 117 - 120 sowie über die Elemente zur Übertragung der Bewegung 108 - 111 wird die von den Antriebselementen erzeugte Bewegung auf den Objektträger 116 übertragen. Aufgrund der punkt- bzw. kugelförmigen Kontaktstellen an den Antriebselementen können etwaige Kippkräfte vermieden werden.

Erfindungsgemäß werden vorzugsweise Piezoaktoren als Antriebselemente verwendet. Piezoaktoren zeichnen sich durch ihre schnelle Reaktion auf eine sich ändernde elektrische Spannung aus. Allerdings reagiert der Objektträger 116 aufgrund seiner Trägheit erheblich langsamer auf eine durch die Piezoaktoren vorgegebene Positionsänderung. Zur Kompensierung der bei hohen Beschleunigungen auftretenden Reaktionskräfte des Objektträgers arbeiten erfindungsgemäß die Antriebselemente (Piezoaktoren) jeweils einer Bewegungsrichtung im Gegentaktprinzip. Mit diesem Prinzip werden ebenfalls Probleme mit Überschwingungen vermieden.

Mit einer geeigneten Anordnung mehrerer Antriebselemente können sowohl Bewegungen in der x-y-Ebene als auch Verkippungen, Verdrehungen, Parallelitätsabweichungen oder Elevationen in z-Richtung detektiert und folglich auch kompensiert oder auch gezielt erzeugt werden.

Selbstverständlich liegt es aber auch im Bereich der Erfindung, andere Aktoren, wie z.B. piezoelektrische Bimorph-Aktoren, elektromagnetische oder elektrostatische Aktoren oder auch Bimetallaktoren, einzusetzen.

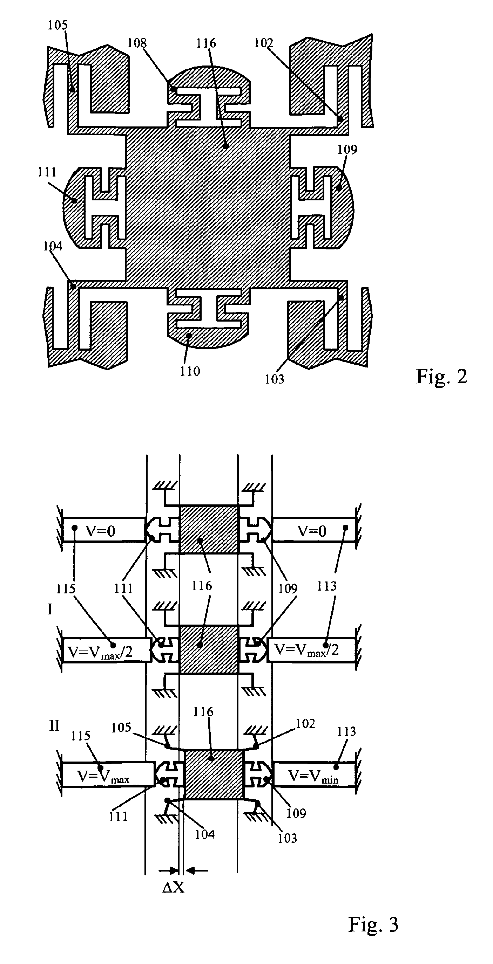

In Fig. 2 ist eine Ausführungsform des oben beschriebenen monolithischen Bauteils, welches das Stützelement 101, den Objektträger 116, die L-förmigen Führungselemente 102 - 105 und die Elemente zur Übertragung der Bewegung von den Antriebselementen auf den Objektträger 108 - 111 umfasst, dargestellt. In dieser Ausführungsform sind die Antriebs- und Führungselemente und die Elemente zur Übertragung der Bewegung spiegelsymmetrisch um den Objektträger positioniert.

In Fig. 3 ist das erfindungsgemäße Verfahren beispielhaft für eine Bewegung des Objektträgers 116 in x-Richtung dargestellt. Das Symbol V steht für die am Aktuator angelegte, auslenkungsproportionale Spannung. In einem ersten Schritt wird die Nullposition eingestellt. Hierfür werden die Antriebselemente (Piezoaktoren) 113, 115 bis zur Hälfte ihrer Stellwege ausgedehnt. Dies ist für die Realisierung des Gegentaktprinzips erforderlich. Der Objektträger 116 ändert dabei seine Position nicht, da die Wirkung der Piezoaktoren 113, 115 über die Elemente zur Übertragung der Bewegung 109, 111 gegenseitig kompensiert wird. Diese Position des Objektträgers wird von den auf den Führungselementen 102 - 105 befindlichen Positionsdetektoren als Null-Position detektiert.

Im folgenden Schritt wird der Piezoaktor 115 ausgedehnt und der in derselben Bewegungsrichtung angeordnete Piezoaktor 113 zusammengedrückt. In Folge dessen wird der Objektträger 116 in x-Richtung entsprechend der Ausdehnung des Piezoaktors 115 verschoben und die senkrecht zu dieser Bewegungsrichtung stehenden Schenkel der L-förmigen Führungselemente 102 - 105 werden verbogen. Dies bewirkt eine ausdehnungsproportionale Änderung des elektrischen Widerstandes der piezoresitiven Positionssensoren, die erfindungsgemäß in den Führungselementen 102 - 105 integriert sind. Die Verschiebung des Objektträgers 116 kann bei Verwendung von jeweils einem Positionsdetektor auf einem Führungselement aus der Differenz der Widerstandsänderung ermittelt und gleichzeitig Lageabweichungen durch z.B. Verkippungen, Verdrehungen oder Parallelitätsabweichungen erkannt und gegebenenfalls korrigiert werden.

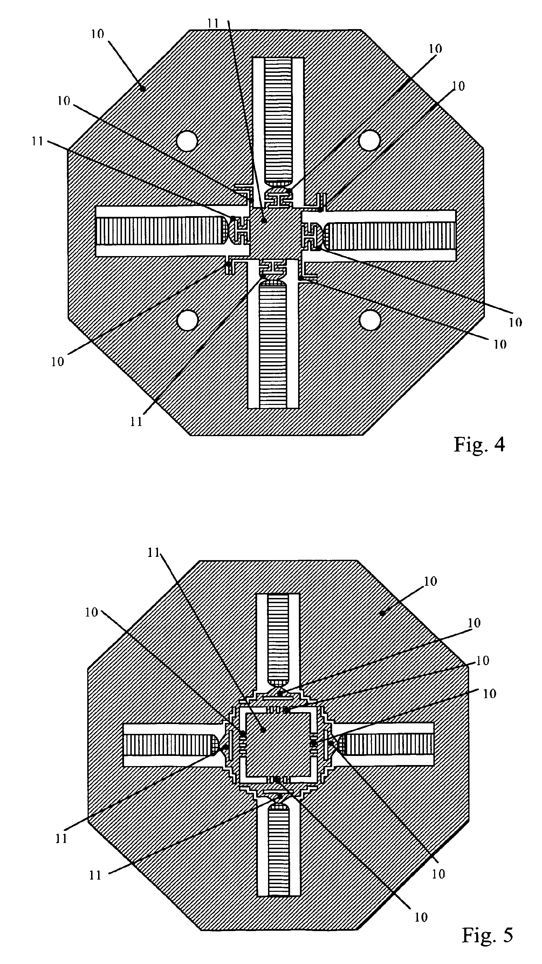

In Fig. 4 ist eine zweite Ausführungsform der erfindungsgemäßen Vorrichtung dargestellt. Hierbei sind die Antriebs- und Führungselemente und die Elemente zur Übertragung der Bewegung rotationssymmetrisch um den Objektträger positioniert.

Fig. 5 zeigt eine dritte Ausführungsform der erfindungsgemäßen Vorrichtung, bei der die Führungselemente 102 - 105 mit den Elementen zur Übertragung der Bewegung 108 - 111 kombiniert sind. Durch diese Kombination werden parasitäre Krafteinleitungen quer zur Bewegungsrichtung der Antriebselemente bei einer dazu orthogonalen Bewegung des Objektträgers 116 vermieden.

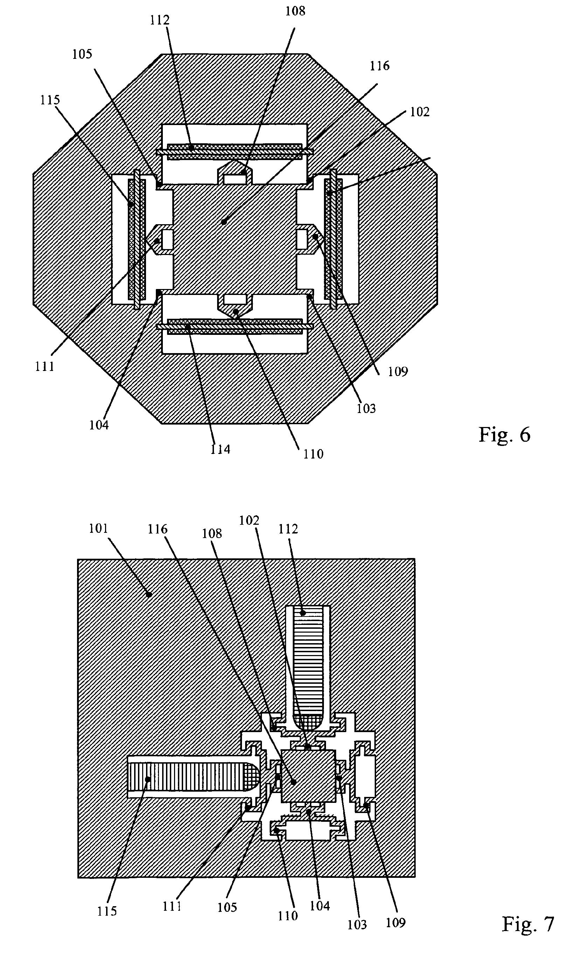

In Fig. 6 ist eine vierte Ausführungsform der erfindungsgemäßen Vorrichtung dargestellt, bei der als Antriebselemente Bimorph-Aktoren, z.B. Bimorph-Piezoaktoren verwendet werden. Dadurch wird eine deutliche Reduzierung der Abmaße der gesamten Konstruktion erreicht.

In Fig. 7 ist eine fünfte Ausführungsform der erfindungsgemäßen Vorrichtung dargestellt, bei der nur zwei Antriebselemente in asymmetrischer Anordnung verwendet werden. Diese Ausführungsform arbeitet nicht im Gegentaktprinzip, vielmehr werden die Rückstellkräfte durch die Führungselemente 104 bzw. 103 erzeugt. Dadurch wird gegenüber den bisher vorgestellten Ausführungsformen die Anzahl der notwendigen Antriebselemente zusammen mit ihren jeweiligen Ansteuerungen reduziert.

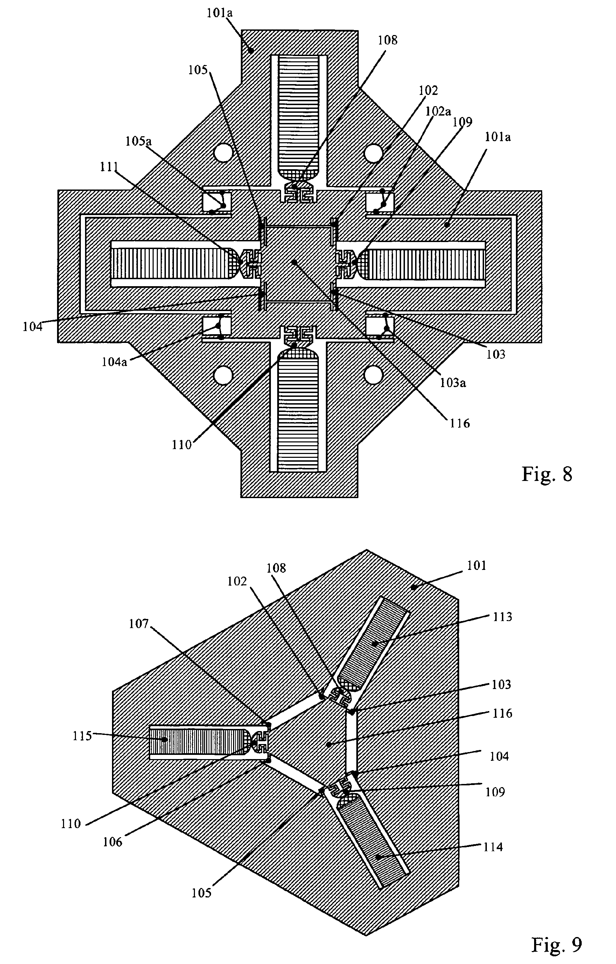

Fig. 8 zeigt ein Ausführungsbeispiel der erfindungsgemäßen Positionierungsvorrichtung, bei dem das Stützelement 101a zweiteilig in geschachtelter Weise ausgeführt ist. Hierbei wird der innere Teil des Stützelementes, der die Antriebselemente für eine Richtung (z.B. x-Richtung) und die Führungselemente 102 - 105 trägt, von den Antriebselementen in der dazu senkrechten Richtung (y-Richtung) bewegt. Die Positionsdetektoren für die erste Bewegungsrichtung (x-Richtung) sind in den Führungselementen 102 - 105 integriert. Die Antriebselemente für die zweite Bewegungsrichtung (y-Richtung) sind im äußeren Teil des Stützelements 101a integriert. Die Positionsdetektoren für die zweite Bewegungsrichtung (y-Richtung) sind in den Führungselementen 102a - 105a integriert.

Fig. 9 zeigt ein Ausführungsbeispiel mit einer 120° Rotationssymmetrie. Mit dieser Ausführungsform der erfindungsgemäßen Vorrichtung ist es möglich, neben linearen Bewegungen in x- und y- Richtung auch partielle Rotationsbewegungen gezielt auszuführen.

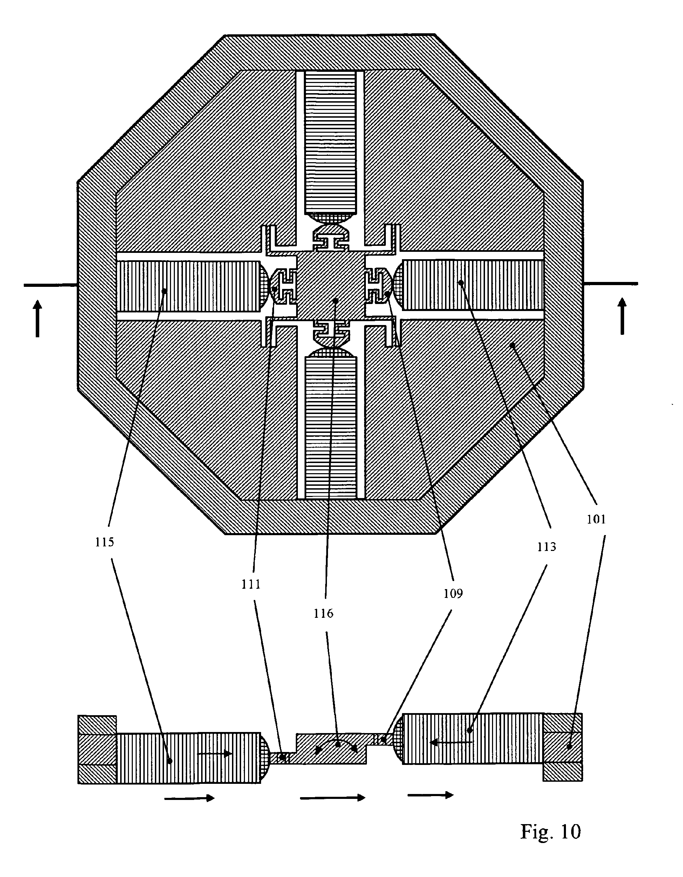

Die Fig. 10 zeigt eine Ausführungsform, bei der neben den Bewegungen in der Ebene (x-, y-Richtung) auch gezielt Kippbewegungen erzeugt werden können. Hierzu erfolgt die Krafteinleitung von einem ersten Antriebselement 113 unterhalb und von einem zweiten gegenüberliegenden Antriebselement 115 oberhalb des Schwerpunktes des Objektträgers 116. Werden beide Antriebselemente ausgedehnt oder kontrahiert, so ergibt sich eine Kippbewegung des Objektträgers. Wird jeweils eines der Antriebselemente ausgedehnt und das jeweils gegenüberliegende Antriebselement kontrahiert (Gegentaktprinzip), so ergibt sich eine Bewegung in der Ebene des Objektträgers 116. Eine Überlagerung dieser Bewegungen ist möglich.

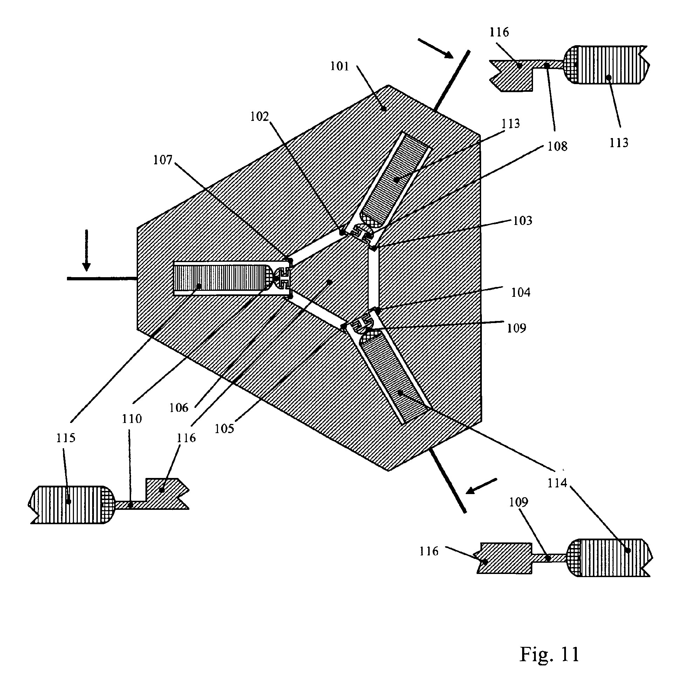

Fig. 11 zeigt eine weitere Ausführungsform der erfindungsgemäßen Vorrichtung, die dafür geeignet ist, ebene Bewegungen, partielle Rotationen und Kippbewegungen zu erzeugen. Die ebenen und Rotationsbewegungen werden analog zu der in Fig. 9 gezeigten Ausführungsform realisiert. Zur Erzeugung von Kippbewegungen erfolgt die Krafteinleitung von den drei Antriebselementen auf drei verschiedenen Höhenniveaus.

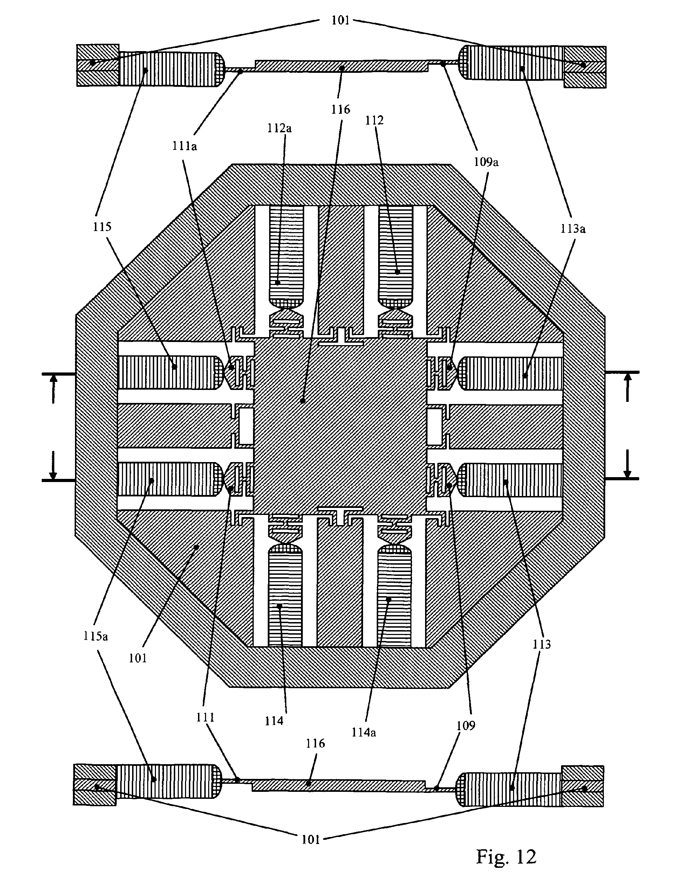

Fig. 12 zeigt eine Ausführungsform der Erfindung zur Erzeugung von ebenen Bewegungen, partiellen Rotationen und Kippbewegungen. Die Erzeugung der ebenen Bewegungen erfolgt nach dem Prinzip der in Fig. 1 gezeigten Ausführungsform, wobei die Aktoren 112 und 112a, 113 und 113a, 114 und 114a, 115 und 115a jeweils im Gleichtakt arbeiten. Zur Erzeugung einer Rotation werden die Aktoren 112, 113, 114, 115 ausgedehnt, und die Aktoren 112a, 113a, 114a und 115a kontrahiert. Eine Rotation in der Gegenrichtung wird auf umgekehrte Weise erzeugt. Zur Erzeugung einer Kippbewegung werden z.B. die Aktoren 113 und 115a kontrahiert, und die Aktoren 113a und 115 ausgedehnt. Andere Kippbewegungen werden auf analoge Weise erzeugt.

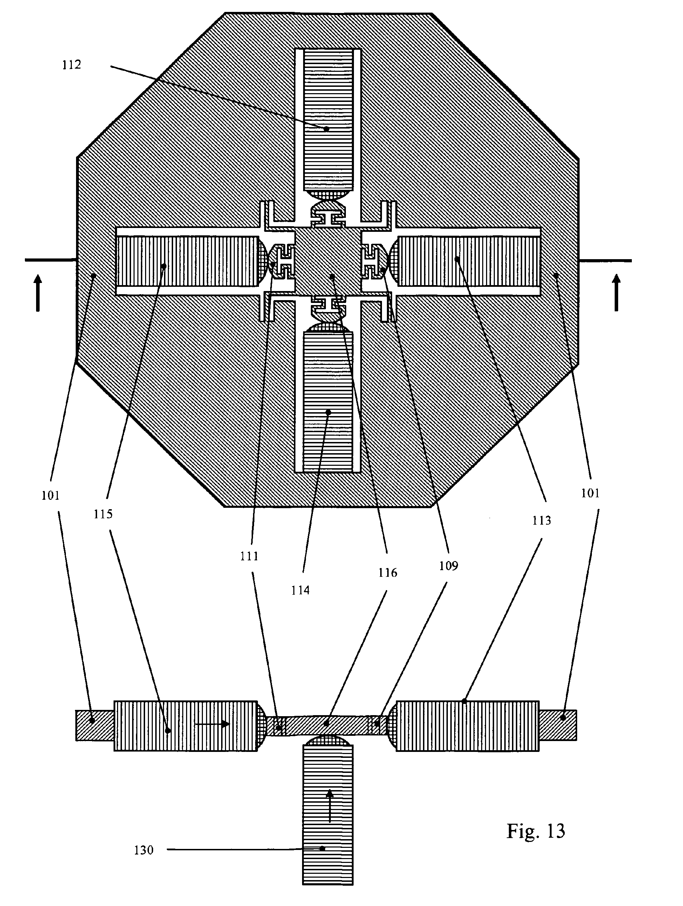

Fig. 13 zeigt beispielhaft eine Ausführungsform der Erfindung, bei der zusätzlich zu den Aktuatoren 112 bis 115 zur Erzeugung der lateralen, Kipp- und partiellen Rotations-Bewegungen ein oder mehrere Aktuatoren 130 unterhalb des Objektträgers 116 zur Erzeugung einer Elevation des Objektträgers 116 entlang der z-Achse angebracht sind. Der oder die Aktuatoren 130 zur Erzeugung der Elevation in z-Richtung können in allen Ausführungsformen der Erfindung nach Fig. 1 bis 12 angebracht werden.

In einer oben beschriebenen bevorzugten Ausführungsform, werden an allen Führungselementen Positionsdetektoren angeordnet, um sowohl Bewegungen in der x-y-Ebene als auch Verdrehungen und Verkippungen zu detektieren, sodass mit den in den Fig. 10 bis 13 gezeigten Ausführungsbeispielen ebenfalls diese Bewegungen detektiert, kontrolliert und gezielt eingestellt werden können.

Erfindungsgemäß wird die gesamte Vorrichtung aus einem Silizium-Wafer einstückig mittels traditioneller Oberflächen-/ Volumen-Mikromechanik-Technologie (engl.: surface micromachining bzw. bulk micromachining) hergestellt. Die seit langem existierende und sich ständig perfektionierende CMOS-Halbleiterfertigungstechnologie ermöglicht die Fertigung der erfindungsgemäßen mikromechanischen Vorrichtung zum Positionieren und Manipulieren eines Objektes mit minimalem Aufwand.

Die erfindungsgemäße Kombination der mikromechanischen Konstruktion mit geeigneten Antriebselementen (Piezoaktoren) und geeigneten Positionsdetektoren (piezoresistive Positionssensoren) ermöglicht ihre Integration in das monolithische Bauteil und somit eine verbesserte Positionsbestimmung des Objektträgers, da die piezoresistiven Widerstände direkt an der Stelle positioniert werden können, an der die tatsächliche Bewegung des Objektträgers am effektivsten detektiert werden kann.

Mit der erfindungsgemäßen Positioniervorrichtung wird eine Erhöhung der Scangeschwindigkeit erreicht und damit verbunden neue Einsatzbereiche (z.B. für Echtzeit-AFM bzw. Videoratenabbildungen) erschlossen. Sie ist vakuum- oder atmosphärentauglich, oder für den Einsatz in Flüssigkeiten oder staubiger Umgebung geeignet. Außerdem ist sie gegen viele Laborchemikalien beständig.

### Bezugszeichenliste

- 101: - Stützelement
- 101a: - zweiteiliges Stützelement
- 102 - 107: - Führungselemente
- 102a - 105a: - Führungselemente
- 108 - 111: - Elemente zur Übertragung der Bewegung vom Antriebselement auf den Objektträger
- 112 - 115: - Antriebselemente
- 112a - 115a: - Antriebselemente
- 116: - Objektträger
- 117 - 120: - Kontaktstellen
- 121 - 128: - Positionsdetektoren
- 129: - Befestigungs- und Montagelöcher
- 130: - Antriebselement/Aktuator

## Patentansprüche

1. Vorrichtung zum mikromechanischen Positionieren und Manipulieren eines Objektes, umfassend:
- mindestens ein Stützelement (101; 101a),
- einen Objektträger (116),
- Führungselemente (102-107, 102a-105a),
- Antriebselemente (112-115, 112a-115a, 130),
- Elemente zur Übertragung der Bewegung (108-111) von einem der Antriebselemente (112-115, 112a-115a, 130) auf den Objektträger (116) und
- Positionsdetektoren (121-128),
wobei Kontaktstellen (117-120) zwischen den Elementen zur Übertragung der Bewegung (108-111) und den jeweiligen Antriebselementen (112-115, 112a-115a, 130) bogen-, kugel- oder spitzförmig ausgebildet sind, wobei das Stützelement (101; 101a), der Objektträger (116), die Führungselemente (102-107, 102a-105a) und die Elemente zur Übertragung der Bewegung (108-111) ein monolithisches Bauteil aus Silizium sind, **dadurch gekennzeichnet, dass** die Positionsdetektoren durch piezoresistive Positionssensoren (121-128) gebildet sind, und dass die Antriebselemente (112-115, 112a-115a, 130) und die piezoresistiven Positionssensoren (121-128) in das monolithische Bauteil integriert sind, wobei in mindestens einem der Führungselemente (102-107, 102a-105a) mindestens einer der piezoresistiven Positionssensoren (121-128) angeordnet ist.

2. Vorrichtung nach Anspruch 1, **dadurch gekennzeichnet, dass** der Objektträger (116) mit dem Stützelement (101; 101a) über die Führungselemente (102-107, 102a-105a, 130) verbunden ist und dass die Elemente zur Übertragung der Bewegung (108-111) an den Objektträger (116) angeformt sind.

3. Vorrichtung nach Anspruch 1 oder 2, **dadurch gekennzeichnet, dass** die Führungselemente (102-107) in zwei laterale Richtungen (x und y) flexibel sind und/oder dass die Elemente zur Übertragung der Bewegung (108-111) in ihrer Bewegungsrichtung in einem vordefinierten Bereich flexibel sind.

4. Vorrichtung nach einem der Ansprüche 1 bis 3, **dadurch gekennzeichnet, dass** jedem der Antriebselemente (112-115; 112a-115a) mindestens eines der Elemente zur Übertragung der Bewegung (108-111) zugeordnet ist.

5. Vorrichtung nach einem der Ansprüche 1 bis 4, **dadurch gekennzeichnet, dass** die Antriebselemente Piezoaktoren (112-115, 112a-115a, 130) oder piezoelektrische Bimorph-Aktoren oder elektromagnetische oder elektrostatische Aktoren oder Bimetallaktoren oder mehrschichtige Aktoren sind.

6. Vorrichtung nach einem der Ansprüche 1 bis 5, **dadurch gekennzeichnet, dass** sie acht der Antriebselemente (112-115, 112a-115a), zwölf der Führungselemente und acht der Elemente zur Übertragung der Bewegung aufweist, die spiegelsymmetrisch um den Objektträger positioniert sind.

7. Vorrichtung nach einem der Ansprüche 1 bis 6, **dadurch gekennzeichnet, dass** die Elemente zur Übertragung der Bewegung (108-111) mit den Führungselementen (102-105) kombiniert sind.

8. Vorrichtung nach einem der Ansprüche 1 bis 7, **dadurch gekennzeichnet, dass** in jedem der Führungselemente jeweils zwei der Positionsdetektoren integriert sind.

9. Vorrichtung nach einem der Ansprüche 1 bis 8, **dadurch gekennzeichnet, dass** die Führungselemente (102-107) in allen Richtungen (Verschiebung, Rotation und Kippung) flexibel sind und die piezoresistiven Positionsdetektoren für die Detektion und Kompensation von Verkippungen, Verdrehungen, Parallelitätsabweichungen oder Elevationen in z-Richtung des Objektträgers (116) geeignet angeordnet sind.

10. Vorrichtung nach einem der Ansprüche 1 bis 9, **dadurch gekennzeichnet, dass** das Stützelement (101a) zweiteilig und verschachtelt ausgebildet ist, wobei ein erster innerer Teil des Stützelementes (101a) den Objektträger (116), die Antriebselemente in einer ersten Bewegungsrichtung, die Elemente zur Übertragung der Bewegung (108-111) und die Führungselemente (102-105; 102a-105a) umfasst und ein zweiter äußerer Teil des Stützelementes (101a) die Antriebselemente in einer zweiten Bewegungsrichtung, die den ersten Teil des Stützelementes (101a) mit seinen Elementen bewegt, umfasst.

11. Vorrichtung nach einem der Ansprüche 1 bis 10, **dadurch gekennzeichnet, dass** mindestens drei der Antriebselemente (113-115) und drei der Elemente zur Übertragung der Bewegung (108-110) in geeigneter Weise rotationssymmetrisch zur Erzeugung von Bewegungen in der Ebene (x-, y-Richtung) und von Rotationsbewegungen angeordnet sind.

12. Vorrichtung nach einem der Ansprüche 1 bis 11, **dadurch gekennzeichnet, dass** mindestens eines der Antriebselemente (130) zur Übertragung der Bewegung in geeigneter Weise zur Erzeugung von z-Elevationsbewegungen des Objektträgers (116) angeordnet ist.

13. Verfahren zum mikromechanischen Positionieren und Manipulieren eines Objektes mit einer Vorrichtung nach einem der Ansprüche 1 bis 12, wobei die Antriebselemente jeweils einer Bewegungsrichtung (112, 114; 113, 115) im Gegentaktprinzip arbeiten, und wobei die folgenden Arbeitsschritte realisiert werden:
- Einstellung einer Ausgangsposition (Nullposition), in der die Antriebselemente (112-115) bis zur Hälfte ihres Stellweges ausgedehnt sind,
- Registrierung der Nullposition mit den piezorsesitiven Positionsdetektoren (121-128),
- Verschiebung, Verdrehung oder Verkippung des Objektträgers (116) in jeweils einer Bewegungs-, Dreh- oder Kipprichtung durch geeignete Kombination von Ausdehnung und/oder Zusammendrückung des oder der jeweiligen Antriebselemente (112-115) in der jeweiligen Bewegungs-, Dreh- oder Kipprichtung, wobei die senkrecht zu dieser Bewegungs-, Dreh- oder Kipprichtung stehenden Führungselemente (102-107, 102a-105a) verbogen werden und mit den jeweiligen piezoresistiven Positionsdetektoren (121-128) die Lageänderung des Objektträgers (116) erfasst wird,
- Auswertung der erfassten Positionsänderung mit der Differenzmethode und Korrektur der Position des Objektträgers (116) durch gezielte Ansteuerung der Antriebselemente (112-115).

14. Verfahren nach Anspruch 13, **dadurch gekennzeichnet, dass** die Krafteinleitung von den Antriebselementen (112-115) auf den Objektträger (116) auf unterschiedlichen Höhenniveaus erfolgt.

## Claims

1. A device for the micromechanical positioning and manipulation of an object, comprising:
- at least one support element (101; 101a),
- an object carrier (116),
- guide elements (102-107, 102a-105a),
- drive elements (112-115, 112a-115a, 130),
- elements (108-111) for transmitting the movement from one of the drive elements (112-115, 112a-115a, 130) to the object carrier (116), and
- position detectors (121-128),
wherein contact points (117-120) between the movement-transmitting elements (108-111) and the associated drive elements (112-115, 112a-115a, 130) are designed in the form of an arc, a ball, or a pointed tip, wherein the support element (101; 101a), the object carrier (116), the guide elements (102-107, 102a-105a), and the movement-transmitting elements (108-111) are a monolithic component of silicon, **characterized in that** the position detectors are formed by piezoresistive position sensors (121-128), and that the drive elements (112-115, 112a-115a, 130) and the piezoresistive position sensors (121-128) are integrated into the monolithic component, wherein in at least one of the guide elements (102-107, 102a-105a) at least one of the piezoresistive position sensors (121-128) is arranged.

2. Device according to Claim 1, **characterized in that** the object carrier (116) is connected to the support element (101; 101a) by way of the guide elements (102-107, 102a-105a, 130), and the movement-transmitting elements (108-111) are formed on the object carrier (116).

3. Device according to one of Claims 1 or 2, **characterized in that** the guide elements (102-107) are flexible in two lateral directions (x and y) and/or the movement-transmitting elements (108-111) are flexible within a predefined range in their direction of movement.

4. Device according to one of Claims 1 to 3, **characterized in that** at least one movement-transmitting element (108-111) is assigned to each of the drive elements (112-115, 112a-115a).

5. Device according to one of Claims 1 to 4, **characterized in that** the drive elements are piezoelectric actuators (112-115, 112a-115a, 130), or piezoelectric bimorph actuators, or electromagnetic or electrostatic actuators, or bimetal actuators, or multilayer actuators.

6. Device according to one of Claims 1 to 5, **characterized in that** it comprises eight of the drive elements (112-115, 112a-115a), twelve of the guide elements, and eight of the movement-transmitting elements, which are arranged with mirror-image symmetry around the object carrier.

7. Device according to one of Claims 1 to 6, **characterized in that** the movement-transmitting elements (108-111) are combined with the guide elements (102-105).

8. Device according to one of Claims 1 to 7, **characterized in that** two position detectors, respectively are integrated into each guide element.

9. Device according to one of Claims 1 to 8, **characterized in that** the guide elements (102-107) are flexible in all directions (displacement, rotation, and tipping), and the piezoresistive position detectors are suitably arranged for the detection and compensation of tipping, rotation, and parallelism deviations or elevations in the z-direction of the object carrier (116).

10. Device according to one of Claims 1 to 9, **characterized in that** the support element (101a) is designed as two-piece interlaced unit, wherein a first, inner part of the support element (101a) comprises the object carrier (116), the drive elements for a first direction of movement, the movement-transmitting elements (108-111), and the guide elements (102-105, 102a-105a), and a second, outer part of the support element (101a) comprises the drive elements for a second direction of movement, which move the first part of the support element (101a) with its elements.

11. Device according to one of Claims 1 to 10, **characterized in that** at least three of the drive elements (113-115) and three of the movement-transmitting elements (108-110) are arranged with rotational symmetry in a manner suitable for generating movements in a plane (x-, y-direction) and rotational movements.

12. Device according to one of Claims 1 to 11, **characterized in that** at least one of the drive movement-transmitting elements (130) is arranged in a manner suitable for generating z-elevation movements of the object carrier (116).

13. Method for the micromechanical positioning and manipulation of an object with a device according to one of Claims 1 to 12, wherein the drive elements each for one direction of movement (112; 114; 113; 115) operate on the push-pull principle, and wherein the following steps are realized:
- setting a starting position (zero position), in which the drive elements (112-115) are extended by half of their adjusting distance,
- recording the zero position with the piezoresistive position detectors (121-128),
- displacing, rotating, or tipping the object carrier (116) each in one direction of movement, rotation, or tipping by means of a suitable combination of extension and/or retraction of one or multiple of the associated drive elements (112-115) in the associated direction of movement, rotation, or tipping, wherein the guide elements (102-107, 102a-105a) perpendicular to this direction of movement, rotation, or tipping are bent, and the change in position of the object carrier (116) is detected by the associated piezoresistive position detectors (121-128),
- evaluating the detected change in position by the difference method and correcting the position of the object carrier (116) by targeted actuation of the drive elements (112-115).

14. Method according to Claim 13, **characterized in that** the introducing forces by the drive elements (112-115) to the object carrier (116) occurs at different heights.

## Revendications

1. Dispositif pour positionnement et manipulation micromécanique d'un objet, comprenant
- au moins un élément d'appui (101; 101a),
- un porte-objet (116),
- des éléments de guidage (102-107, 102a-105a),
- des éléments d'entraînement (112-115, 112a-115a, 130),
- des éléments pour la transmission du mouvement (108-111) d'un des éléments d'entraînement (112-115, 112a-115a, 130)sur le porte-objet (116) et
- des capteurs de position (121-128),
pour lequel les points de contact (117-120) entre les éléments destinés à la transmission du mouvement (108-111) et les éléments d'entraînement (112-115, 112a-115a, 130)respectifs sont constitués de forme arquée, sphérique ou pointue, pour lequel l'élément d'appui (101; 101a), le porte-objet (116), les éléments de guidage (102-107, 102a-105a)et les éléments destinés à la transmission du mouvement (108-111) sont un composant monolithique en silicium **caractérisé en ce que** les capteurs de position sont constitués par des capteurs de position (121-128) piézorésistifs et **en ce que** les éléments d'entraînement (112-115, 112a-115a, 130) et les capteurs de position (121-128) piézorésistifs sont intégrés dans le composant monolithique, au moins un des capteurs de position (121-128) piézorésistifs étant disposé dans au moins un des éléments de guidage (102-107, 102a-105a).

2. Dispositif selon la revendication 1 **caractérisé en ce que** le porte-objet (116) est associé à l'élément d'appui (101;101a) par les éléments de guidage (102-107, 102a-105a, 130) et **en ce que** les éléments destinés à la transmission du mouvement (108-111) sont formés sur le porte-objet (116).

3. Dispositif selon la revendication 1 ou 2 **caractérisé en ce que** les éléments de guidage (102-107) sont flexibles dans deux directions latérales (x et y) et/ou **en ce que** les éléments destinés à la transmission du mouvement (108-111) sont flexibles dans leur sens de déplacement dans une zone prédéfinie.

4. Dispositif selon une quelconque des revendications 1 à 3 **caractérisé en ce qu'**à chacun des éléments d'entraînement (112-115; 112a-115a) est attribué au moins un des éléments destinés à la transmission du mouvement (108-111).

5. Dispositif selon une quelconque des revendications 1 à 4 **caractérisé en ce que** les éléments d'entraînement sont des actionneurs piézoélectriques (112-115, 112a-115a), 130) ou des actionneurs bimorphes piézoélectriques ou des actionneurs électromagnétiques ou électrostatiques ou des actionneurs bimétalliques ou des actionneurs multicouches.

6. Dispositif selon une quelconque des revendications 1 à 5 **caractérisé en ce qu'**il présente huit des éléments d'entraînement (112-115, 112a-115a), douze des éléments de guidage et huit des éléments destinés à la transmission du mouvement, qui sont positionnés en symétrie spéculaire autour du porte-objet.

7. Dispositif selon une quelconque des revendications 1 à 6 **caractérisé en ce que** les éléments destinés à la transmission du mouvement (108-111) sont combinés avec les éléments de guidage (102-105).

8. Dispositif selon une quelconque des revendications 1 à 7 **caractérisé en ce que** dans chacun des éléments de guidage à chaque fois deux des capteurs de position sont intégrés.

9. Dispositif selon une quelconque des revendications 1 à 8 **caractérisé en ce que** les éléments de guidage (102-107) sont flexibles dans toutes les directions (translation, rotation et basculement) et les capteurs de position piézorésistifs sont disposés de façon appropriée pour la détection et la compensation des basculements, des torsions, des écarts de parallélisme ou des élévations dans le sens z du porte-objet (116).

10. Dispositif selon une quelconque des revendications 1 à 9 **caractérisé en ce que** l'élément d'appui (101a) est constitué en deux parties et imbriqué, pour lequel une première partie intérieure de l'élément d'appui (101a) comprend le porte-objet (116), les éléments d'entraînement dans un premier sens de déplacement, les éléments destinés à la transmission du mouvement (108-111) et les éléments de guidage (102-105; 102a-105a) et comprend une deuxième partie extérieure de l'élément d'appui (101a), les éléments d'entraînement dans un deuxième sens de déplacement qui déplace la première partie de l'élément d'appui (101a) avec ses éléments.

11. Dispositif selon une quelconque des revendications 1 à 10 **caractérisé en ce qu'**au moins trois des éléments d'entraînement (113-115) et trois des éléments destinés à la transmission du mouvement (108-110) sont disposés d'une manière appropriée symétrique en rotation pour produire des mouvements dans le plan (direction x, y) et des mouvements de rotation.

12. Dispositif selon une quelconque des revendications 1 à 11 **caractérisé en ce qu'**au moins un des éléments d'entraînement (130) destinés à la transmission du mouvement est disposé d'une manière appropriée pour produire des mouvements d'élévation z du porte-objet (116).

13. Procédé pour le positionnement et la manipulation micromécanique d'un objet avec un dispositif selon une quelconque des revendications 1 à 12 pour lequel les éléments d'entraînement fonctionnent dans chaque sens de déplacement (112, 114; 113, 115) selon un principe symétrique et pour lequel les étapes de travail suivantes sont réalisées:
- réglage d'une position initiale (position zéro) dans laquelle les éléments d'entraînement (112-115) sont étendus jusqu'à la moitié de leur course de réglage,
- enregistrement de la position zéro avec les capteurs de position (121-128) piézorésistifs,
- translation, torsion ou basculement du porte-objet (116) dans chaque direction de déplacement, de rotation ou de basculement par combinaison appropriée de l'expansion et/ou la compression du ou des éléments d'entraînement (112-115) respectifs dans le sens respectif de déplacement, de rotation ou de basculement, pour lequel les éléments de guidage (102-107, 102a-105a) situés perpendiculairement à ce sens de déplacement, de rotation ou de basculement sont déformés et la modification de position du porte-objet (116) est saisie avec les capteurs de position (121-128) piézorésistifs respectifs,
- évaluation de la modification de position saisie avec la méthode de différence et la correction de la position du porte-objet (116) par pilotage précis des éléments d'entraînement (112-115).

14. Procédé selon la revendication 13 **caractérisé en ce que** la mise en oeuvre de la force des éléments d'entraînement (112-115) sur le porte-objet (116) a lieu à des niveaux de hauteur différents.
